# EUROPÄISCHE PATENTSCHRIFT

(11) **EP 0 543 253 B1**
(45) Veröffentlichungstag und Bekanntmachung des Hinweises auf die Patenterteilung: **06.03.1996**
(21) Anmeldenummer: 92119167.2
(22) Anmeldetag: 09.11.1992
(51) Int. Cl.: G21C 3/12, G21C 5/06, G21C 19/20

(54) **Reaktorkern eines Kernreaktors und Kernreaktorbrennelement mit leichtgängigem Einsetzen**
Nuclear reactor core and fuel element with easier positioning
Coeur de réacteur nucléaire et élément combustible avec positionnement facilité

(30) Priorität: 22.11.1991 DE 4138478
(43) Veröffentlichungstag der Anmeldung: 26.05.1993
(73) Patentinhaber: SIEMENS AKTIENGESELLSCHAFT, D-80333 München (DE)
(72) Erfinder: Steinke, Alexander, W-8553 Ebermannstadt (DE); Bökers, Franz-Josef, W-8510 Fürth (DE); Rudolph, Matthias, W-8521 Weisendorf (DE); Ringleb, Günter, W-8551 Röttenbach (DE)

(56) Entgegenhaltungen:
- EP-A- 0 277 533
- CA-A- 871 397
- FR-A- 2 614 128
- US-A- 4 676 945

## Beschreibung

Die Erfindung betrifft einen Reaktorkern eines Kernreaktors entsprechend dem Oberbegriff des Patentanspruchs 1 und ein Kernreaktorbrennelement entsprechend dem Oberbegriff der Patentansprüche 4 und 5.

Ein Reaktorkern entsprechend dem Oberbegriff des Patentanspruchs 1 ist insbesondere in Druckwasserkernreaktoren üblich. Auf der unteren Kerngitterplatte sind in zueinander parallelen Reihen und zueinander parallelen Spalten, die äquidistant sind und miteinander einen rechten Winkel bilden, die Brennelementfüße einer Reihe von Kernreaktorbrennelementen dicht nebeneinander angeordnet. Ober- und Unterseite der Brennelementfüße haben quadratische Kontur, und an der Oberseite eines Brennelementfußes ist jeweils das eine Ende von Steuerstabführungsrohren befestigt, deren anderes Ende an der Unterseite eines Brennelementkopfes angebracht ist. Zwischen Brennelementkopf und Brennelementfuß befinden sich ferner mit Abstand zueinander gitterförmige Abstandhalter, und jedes Steuerstabführungsrohr ist durch eine Masche dieser Abstandhaltergitter geführt, die formschlüssig an den Steuerstabführungsrohren befestigt sind.

Durch die Maschen der Abstandhaltergitter sind ferner Kernbrennstoff enthaltende Brennstäbe geführt, deren Enden sowohl vom Brennelementkopf als auch vom Brennelementfuß Abstand haben und die in den Maschen der Abstandhaltergitter kraftschlüssig durch Federn gehalten sind.

Jedem Brennelementfuß sind zwei Zentrierstifte an der Oberseite der unteren Kerngitterplatte zugeordnet. Diese beiden Zentrierstifte sind in bezug auf die Unterseite des betreffenden Brennelementfußes diagonal angeordnet und greifen in zwei entsprechende Zentrierbohrungen im Brennelementfuß.

Auch ein Kernreaktorbrennelement entsprechend dem Oberbegriff der Patentansprüche 4 und 5 ist bereits üblich und beispielsweise zum Einsetzen in einen Reaktorkern entsprechend dem Oberbegriff des Patentanspruchs 1 bestimmt. Die Fase an der Mantelfläche der die Oberseite des Brennelementfußes bildenden Platte hat erheblich weniger als halbe Plattenhöhe.

Ein solches Kernreaktorbrennelement wird jeweils mit dem Brennelementkopf an einem Kran hängend in den Reaktorkern eingesetzt, und der Erfindung liegt die Aufgabe zugrunde, Schwergängigkeit des Brennelements beim Einsetzen in den Reaktorkern kurz vor dem Aufsetzen des Brennelementfußes auf der unteren Kerngitterplatte zu vermeiden.

Zur Lösung dieser Aufgabe hat ein Reaktorkern der eingangs erwähnten Art erfindungsgemäß die Merkmale des kennzeichnenden Teils des Patentanspruchs 1.

Dadurch wird die Reibung zwischen der Wandung der Zentrierbohrung im Brennelementfuß und dem Zentrierstift auf der Oberseite der Kerngitterplatte, insbesondere wenn es zu einer Schiefstellung des Brennelementfußes kurz vor dem Aufsetzen des Brennelementfußes auf der unteren Kerngitterplatte kommt, verringert. Dies bewirkt Leichtgängigkeit des Brennelements beim Einsetzen in den Reaktorkern.

Patentanspruch 2 ist auf eine Weiterbildung gerichtet, die einen großen Führungsweg des Zentrierstiftes in der Zentrierbohrung beim Einsetzen des Kernreaktorbrennelements in den Reaktorkern gewährleistet.

Zur Lösung der angegebenen Aufgabe hat ferner ein Kernreaktorbrennelement der eingangs erwähnten Art erfindungsgemäß die Merkmale des kennzeichnenden Teils des Patentanspruchs 4.

Dies vermindert beim Einsetzen des Kernreaktorbrennelements in den Reaktorkern die Reibung zwischen der Außenfläche des Mantelkörpers des Brennelementfußes dieses Kernreaktorbrennelements einerseits und der Außenfläche des Mantelkörpers von benachbarten, bereits in den Reaktorkern eingesetzten Kernreaktorbrennelementen oder einer Kernumfassung andererseits. Dies führt ebenfalls zu Leichtgängigkeit des Kernreaktorbrennelements beim Einsetzen in den Reaktorkern.

Besonders große Leichtgängigkeit beim Einsetzen eines Kernreaktorbrennelements in den Reaktorkern wird bewirkt, wenn ein Kernreaktorbrennelement der eingangs erwähnten Art erfindungsgemäß die Merkmale des kennzeichnenden Teils des Patentanspruchs 5 hat.

Die Erfindung und ihre Vorteile seien anhand der Zeichnung an Ausführungsbeispielen näher erläutert:

FIG 1 zeigt zum Teil geschnitten entsprechend der strichpunktierten Linie I-I in FIG 2 in Seitenansicht ein Teil eines erfindungsgemäßen Reaktorkerns eines Druckwasserkernreaktors.

FIG 2 zeigt einen Schnitt entsprechend der strichpunktierten Linie II-II in FIG 1.

FIG 3 zeigt in Seitenansicht mit einem Schnitt entsprechend der strichpunktierten Linie III-III in FIG 4 drei in FIG 1 und 2 dargestellte Brennelementfüße.

FIG 4 zeigt einen Schnitt von FIG 3.

FIG 5-7 zeigen jeweils stark vergrößert und in Seitenansicht einen der Brennelementfüße aus FIG 3 jeweils geschnitten entsprechend der strichpunktierten Linie III-III in FIG 4.

FIG 8 zeigt in Seitenansicht einen Zentrierstift in einem geschnitten dargestellten schiefgestellten Brennelementfuß.

FIG 9 zeigt in Seitenansicht und entsprechend der strichpunktierten Linie III-III in FIG 4 geschnittene, nebeneinander angeordnete Brennelementfüße aus FIG 3, von denen einer schiefgestellt ist.

FIG 10 zeigt in Draufsicht auf die Unterseite eines Brennelementfußes die Einführschräge einer Zentrierbohrung.

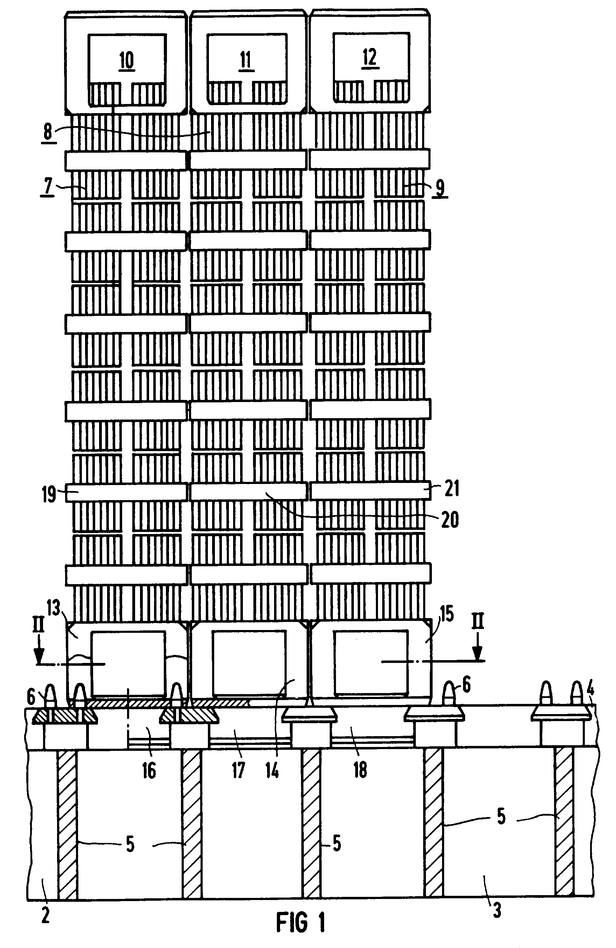

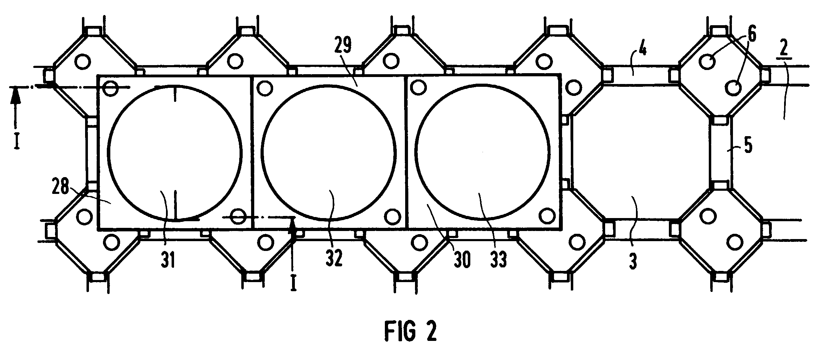

Der Reaktorkern eines Druckwasserkernreaktors nach den FIG 1 und 2 weist eine untere Kerngitterplatte 2 auf mit Durchführungen 3, die in zueinander rechtwinkligen, äquidistanten Zeilen und Spalten nebeneinander angeordnet sind. Die Kerngitterplatte 2 ist aus hochkant stehenden, sich rechtwinklig kreuzenden, äquidistanten Stegen 4 und 5 zusammengesetzt, die die Durchführungen 3 der unteren Kerngitterplatte 2 bilden. An den Kreuzungsstellen von jeweils einem Steg 4 und einem zu ihm rechtwinkligen Steg 5 sind jeweils zwei Zentrierstifte 6 angeordnet, die sich alle auf zueinander parallelen Diagonalen zum quadratischen Querschnitt der Durchführungen 3 befinden.

Auf der unteren Kerngitterplatte 2 sind drei Kernreaktorbrennelemente 7,8 und 9 mit zur unteren Kerngitterplatte 2 rechtwinkliger, vertikaler Längsachse aufgesetzt.

Jedes Kernreaktorbrennelement 7 bis 9 hat einen Brennelementkopf 10,11 und 12 sowie einen Brennelementfuß 13,14 und 15. Jeder Brennelementfuß 13 bis 15 hat eine Ober- und eine Unterseite mit quadratischer Kontur und sitzt mit der Unterseite auf der Oberseite der unteren Kerngitterplatte 2 auf. An der Unterseite eines jeden Brennelementfußes 13 bis 15 ist jeweils ein hohlzylinderförmiges Vorzentrierrohr 16, 17 und 18 zentrisch angebracht, mit dem der jeweilige Brennelementfuß 13 bis 15 in eine der Durchführungen 3 der unteren Kerngitterplatte 2 greift.

Zwischen dem Brennelementkopf 10 und dem Brennelementfuß 13, dem Brennelementkopf 11 und dem Brennelementfuß 14 sowie dem Brennelementkopf 12 und dem Brennelementfuß 15 sind in FIG 1 die zu den Kernreaktorbrennelementen 7,8 und 9 gehörenden vertikalen Steuerstabführungsrohre und Kernbrennstoff enthaltenden Brennstäbe schematisch angedeutet, die durch die Maschen von ebenfalls schematisch angedeuteten Abstandhaltergittern 19,20 und 21 geführt sind.

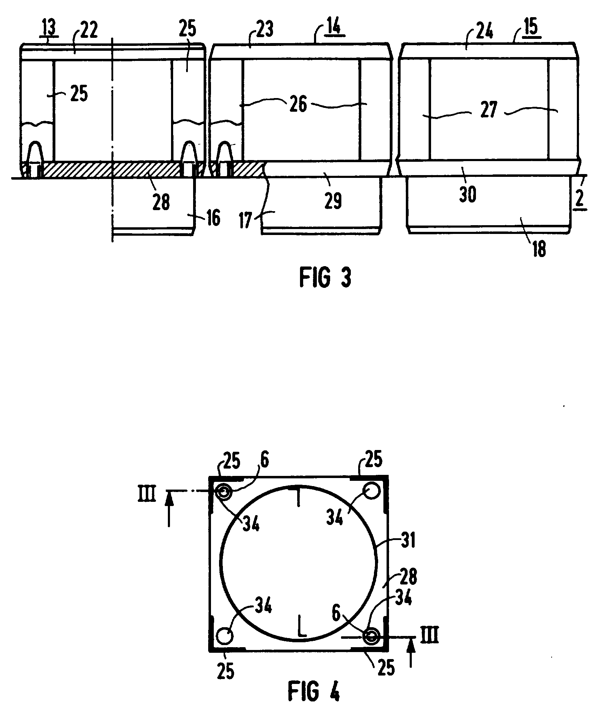

Wie insbesondere FIG 3 und 4 erkennen lassen, ist die Oberseite eines Brennelementfußes 13 bis 15 durch eine Platte 22,23 bzw.24 mit quadratischer Kontur gebildet, die an einem Mantelkörper angebracht ist. Dieser Mantelkörper besteht aus jeweils vier gleich langen Winkelstücken 25 bzw.26 und 27, von denen jeweils einer in jeder Ecke einer Rahmenplatte 28 bzw.29 und 30 rechtwinklig auf der Oberseite dieser Rahmenplatte stehend, festgeschweißt ist. Diese Rahmenplatte 28 bzw.29 und 30 bildet die Unterseite des Brennelementfußes 13 bzw.14 und 15, mit dem der betreffende Brennelementfuß 13 bis 15 auf der Oberseite der Kerngitterplatte 2 aufsteht.

Während die Unterenden der Winkelstücke 25 bzw.26 und 27 mit der Rahmenplatte 28 bzw.29 und 30 verschweißt sind, sind ihre Oberenden in den Ecken der Platten 22 bzw.23 und 24 des Brennelementfußes 13 bzw.14 oder 15 auf der Unterseite dieser Platten stehend festgeschweißt. Dort schließen die Winkelstücke 25 bzw. 26 und 27 mit ihrer Außenfläche mit den Kanten an den Ecken der betreffenden Platten 22,23 bzw.24 ab und gehen stufenlos in die Außenfläche der den Mantelkörper des Brennelementfußes 13 bis 15 bildenden Winkelstücke 25 bzw. 26 und 27 über. Die Rahmenplatte 28 des Brennelementfußes 13 hat genauso wie die Rahmenplatte 29 und 30 der Brennelementfüße 14 und 15 eine zentrale Durchführung 31. Wie die zentralen Durchführungen der Rahmenplatte 29 und 30 in die an ihren beiden Enden offenen Vorzentrierrohre 17 und 18 der Brennelementfüße 14 und 15 auf der Unterseite der Rahmenplatten 29 und 30 übergehen, so geht auch die zentrale Durchführung 31 der Rahmenplatte 28 in das an beiden Enden offene Vorzentrierrohr 16 an der Unterseite der Rahmenplatte 28 über.

An der Unterseite der Rahmenplatte 29 und 30 mit quadratischem Profil der Brennelementfüße 14 und 15 befinden sich genauso wie an der Unterseite der Rahmenplatte 28 mit quadratischem Profil Zentrierbohrungen 34 für die Zentrierstifte 6 an der unteren Kerngitterplatte 2.

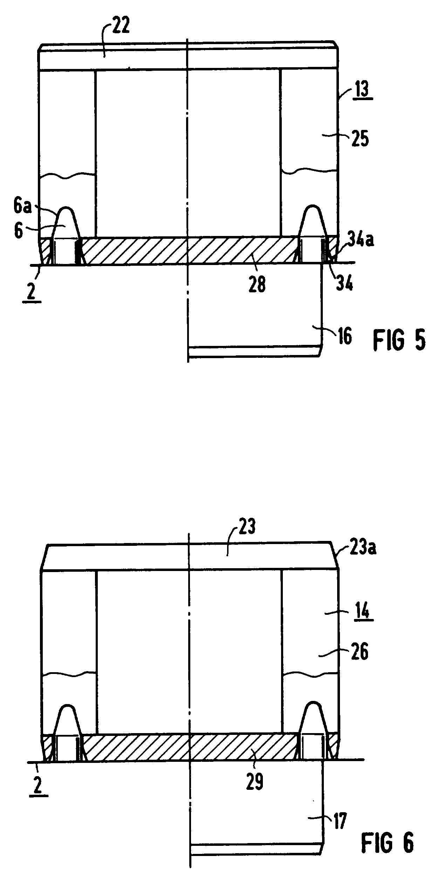

Wie Figur 5 zeigt, sind die den Mantelkörper des Brennelementfußes 13 bildenden Winkelstücke 25 gleich lang. Ferner schließen diese Winkelstücke 25 mit ihren Außenflächen mit den Kanten der Rahmenplatte 28 ab.

Die Zentrierstifte 6 haben an dem Ende, mit dem sie an der unteren Kerngitterplatte 2 befestigt sind, einen zylinderförmigen Teil, dessen Höhe etwa gleich der Plattenhöhe der Rahmenplatte 28 ist. Am anderen Ende laufen die Zentrierstifte 6 in einen Konus 6a aus. Die Einführschräge 34a der Zentrierbohrung 34 hat umlaufend um 360° einen spitzen Neigungswinkel bezogen auf die Längsachse der Zentrierbohrung 34 in der Rahmenplatte 28 der gleich dem spitzen Neigungswinkel α des Konus 6a bezogen auf die Längsachse der Zentrierstifte 6 ist. Der Wert des spitzen Neigungswinkels der Schräge kann auch im Bereich von 0.7 α bis 1.3 α, günstigerweise im Bereich von 0.85 α bis 1.15 α liegen. Der Winkel α kann beispielsweise 15° betragen.

Der Brennelementfuß 14 nach Figur 6 unterscheidet sich vom Brennelementfuß 13 nach Figur 5 dadurch, daß die die Oberseite des Brennelementfußes 14 bildende Platte 23 an der Mantelfläche eine in Richtung der Brennstäbe des Kernreaktorbrennelements verlaufende Fase 23a aufweist, deren Höhe gleich der Plattenhöhe der Platte 23 ist und die stufenlos in die Außenfläche des durch die Winkelstücke 26 gebildeten Mantelkörpers übergeht.

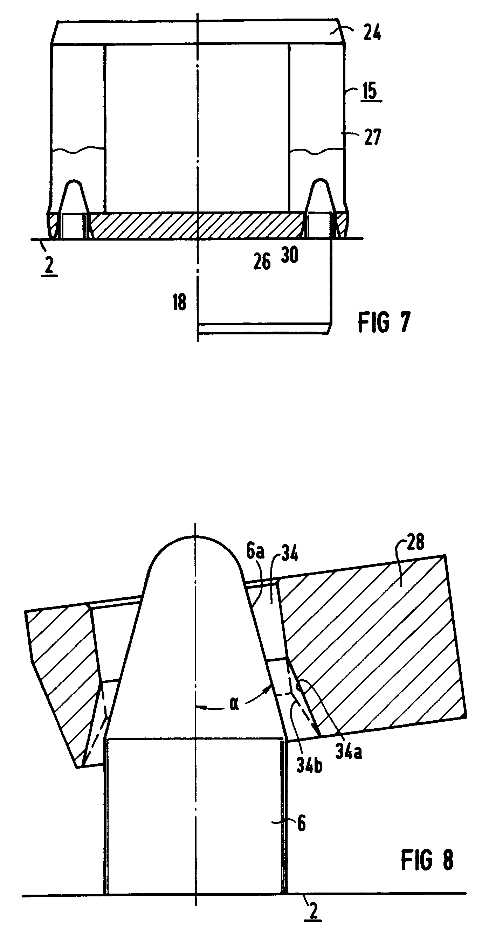

Der Brennelementfuß 15 nach Figur 7 unterscheidet sich vom Brennelementfuß 14 nach Figur 6 dadurch, daß die Rahmenplatte 30 an der Unterseite des Brennelementfußes 15 die Außenfläche der den Mantelkörper des Brennelementfußes 15 bildenden Winkelstücke 27 überragt.

Figur 8 zeigt beispielsweise die Rahmenplatte 28 des Brennelementfußes 13 in Schiefstellung kurz vor dem Aufsetzen dieses Brennelementfußes 13 auf die untere Kerngitterplatte 2. Die Zentrierbohrung 34 hat an der Unterseite der Rahmenplatte 18 umlaufend um 360° eine Einführschräge 34a, deren Neigungswinkel in bezug auf die Längsachse der Zentrierbohrung 34 gleich dem Neigungswinkel α des Konus 6a des Zentrierstiftes 6 in bezug auf die Längsachse dieses Zentrierstiftes 6 ist. Gestrichelt ist in der Zentrierbohrung 34 eine Einführschräge 34b umlaufend um 360° angedeutet. Der Neigungswinkel dieser Einführschräge 34b in bezug auf die Längsachse der Zentrierbohrung 34 ist erheblich größer als der Neigungswinkel des Konus 6a in bezug auf die Längsachse des Zentrierstiftes 6. Es ist deutlich erkennbar, daß die Einführschräge 34a verglichen mit der Einführschräge 34b durch wenig Reibung Leichtgängigkeit der Rahmenplatte 28 beim Eingreifen des Zentrierstiftes 6 in die Zentrierbohrung 34 bewirkt.

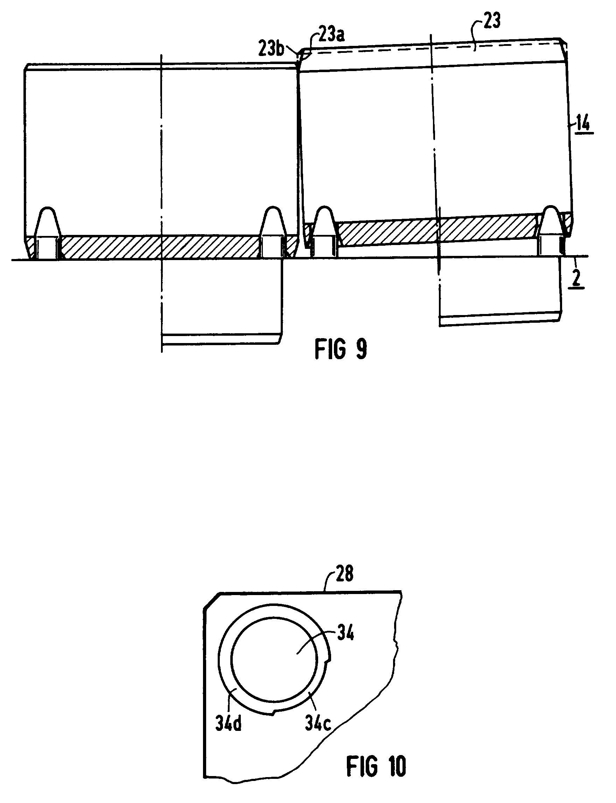

In Figur 9 ist beispielsweise der Brennelementfuß 14 nach Figur 6 in Schiefstellung kurz vor dem Aufsetzen auf die untere Kerngitterplatte 2 dargestellt. An der die Oberseite des Brennelementfußes 14 bildenden Platte 23 ist an der Mantelfläche gestrichelt eine Fase 23b in Richtung der Brennstäbe des Kernreaktorbrennelements dargestellt, deren Höhe erheblich geringer als die halbe Plattenhöhe der Platte 23 ist. Auch in Figur 9 ist deutlich die Leichtgängigkeit beim Aufsetzen des Brennelementfußes 14 auf die untere Kerngitterplatte 2 erkennbar, die sich durch wenig Reibung der Mantelfläche der Platte 23 an einem benachbarten Brennelementfuß wegen der Plattenhöhe der Fase 23b ergibt.

Figur 9 läßt auch erkennen, daß noch bessere Leichtgängigkeit eines Kernreaktorbrennelements beim Einsetzen in den Reaktorkern erzielt wird, wenn, wie beim Brennelementfuß 15 nach Figur 7, nicht nur die Fase an der Mantelfläche der die Oberseite des Brennelementfußes 15 bildenden Platte 24 Plattenhöhe hat und stufenlos in die Außenfläche des durch die Winkelstücke 27 gebildeten Mantelkörpers übergeht, sondern wenn diese Außenfläche auch etwas zurückgenommen ist und die die Unterseite des Brennelementfußes 15 bildende Rahmenplatte 30 die Außenfläche des durch die Winkelstücke 27 gebildeten Mantelkörpers überragt.

Die in FIG 10 erkennbare Ausführungsform der Zentrierbohrung 34 an der Unterseite z.B. in einer Ecke der Rahmenplatte 28 des Brennelementfußes 13 nach FIG 5 ist mit einer Einführschräge an der Wandung versehen, deren Neigungswinkel in bezug auf die Längsachse der Zentrierbohrung 34 in einem zum Diagonalschnittpunkt dieser Unterseite hin offenen 90°-Sektor 34c gleich dem Neigungswinkel α des Konus 6a des Zentrierstiftes 6 an der unteren Kerngitterplatte 2 bezogen auf die Längsachse des Zentrierstiftes 6 ist, während der Neigungswinkel im 270°-Restsektor 34d größer als der Neigungswinkel α des Konus 6a ist.

## Patentansprüche

1. Reaktorkern eines Kernreaktors mit einer unteren Kerngitterplatte und einem Kernreaktorbrennelement, das Kernbrennstoff enthaltende Brennstäbe über der ein regelmäßiges Polygon, insbesondere ein Quadrat oder ein regelmäßiges Sechseck, als Kontur aufweisenden Oberseite eines Brennelementfußes aufweist, der mit seiner ebenfalls die Kontur des regelmäßigen Polygons aufweisenden Unterseite auf der Oberseite der unteren Kerngitterplatte aufsteht, sowie mit einem Zentrierstift, der mit einem Ende an der Oberseite der unteren Kerngitterplatte angebracht ist und der am anderen Ende in einen Konus ausläuft und in eine Zentrierbohrung im Brennelementfuß an dessen Unterseite greift, deren Wandung mit einer Einführschräge für den Zentrierstift versehen ist,
**dadurch gekennzeichnet**, daß der spitze Neigungswinkel der Einführschräge (34a) bezogen auf die Längsachse der Zentrierbohrung (34) zumindest in einem Sektor (34c) der Wandung der Zentrierbohrung (34) einen Wert im Bereich von 0.7 α bis 1.3α hat, mit α gleich dem spitzen Neigungswinkel des Konus (6a) am Zentrierstift (6) bezogen auf die Längsachse des Zentrierstifts (6).

2. Reaktorkern nach Anspruch 1,
**dadurch gekennzeichnet**,
daß die Einführschräge außerhalb des Sektors (34c) einen größeren Neigungswinkel hat als innerhalb dieses Sektors (34c).

3. Reaktorkern nach Anspruch 1,
**dadurch gekennzeichnet**,
daß der spitze Neigungswinkel der Einführschräge (34a) zumindest in dem Sektor (34c) der Wandung der Zentrierbohrung (34) gleich dem spitzen Neigungswinkel α des Konus (6a) ist.

4. Kernreaktorbrennelement mit einem Brennelementfuß, über dessen Oberseite sich Kernbrennstoff enthaltende Brennstäbe befinden und dessen Oberseite durch eine ein regelmäßiges Polygon, insbesondere ein Quadrat oder ein regelmäßiges Sechseck, als Kontur aufweisende Platte gebildet ist, deren Mantelfläche eine in Richtung der Brennstäbe verlaufende Fase aufweist und stufenlos in die Außenfläche eines Mantelkörpers übergeht, an dem die Platte angebracht ist und an dem sich die Unterseite des Brennelementfußes mit einer Zentrierbohrung für einen Zentrierstift befindet,
**dadurch gekennzeichnet**, daß die Fase (23a) an der Mantelfläche der die Oberseite des Brennelementfußes bildenden Platte (23) mindestens halbe, vorzugsweise ganze Plattenhöhe hat und absatzlos in die Außenfläche des Mantelkörpers übergeht.

5. Kernreaktorbrennelement mit einem Brennelementfuß, über dessen Oberseite sich Kernbrennstoff enthaltende Brennstäbe befinden und dessen Oberseite durch eine ein regelmäßiges Polygon, insbesondere ein Quadrat oder ein regelmäßiges Sechseck, als Kontur aufweisende Platte gebildet ist, deren Mantelfläche eine in Richtung der Brennstäbe verlaufende Fase aufweist und stufenlos in die Außenfläche eines Mantelkörpers übergeht, an dem die Platte angebracht ist und an dem sich die Unterseite des Brennelementfußes mit einer Zentrierbohrung für einen Zentrierstift befindet,
**dadurch gekennzeichnet**, daß der Mantelkörper auf einer Rahmenplatte (30) mit der Kontur eines regelmäßigen Polygons angebracht ist, die sich an der Unterseite des Brennelementfußes (15) befindet und die Außenfläche des Mantelkörpers überragt.

## Claims

1. Reactor core of a nuclear reactor, having a lower core grid plate and a nuclear reactor fuel element, which has nuclear-fuel-containing fuel rods above the top side of a fuel element foot, the contour of which top side is that of a regular polygon, in particular a square or a regular hexagon, and the bottom side of which fuel element foot likewise has the contour of the regular polygon and stands on the top side of the lower core grid plate, also having a centring pin, one end of which is attached to the top side of the lower core grid plate and the other end of which tapers off into a cone and engages in a centring bore in the fuel element foot on the bottom side thereof, the wall of which centring bore is provided with an insertion slope for the centring pin, characterised in that the acute angle of inclination of the insertion slope (34a) with respect to the longitudinal axis of the centring bore (34) has at least in one sector (34c) of the wall of the centring bore (34) a value in the range of 0.7 α to 1.3 α, with α being equal to the acute angle of inclination of the cone (6a) on the centring pin (6) with respect to the longitudinal axis of the centring pin (6).

2. Reactor core according to claim 1, characterised in that the insertion slope has a greater angle of inclination outside the sector (34c) than it does inside this sector (34c).

3. Reactor core according to claim 1, characterised in that the acute angle of inclination of the insertion slope (34a), at least in the sector (34c) of the wall of the centring bore (34), is equal to the acute angle of inclination α of the cone (6a).

4. Nuclear reactor fuel element having a fuel element foot, located above the top side of which are nuclear-fuel-containing fuel rods, and which top side is formed by a plate, the contour of which is that of a regular polygon, in particular a square or a regular hexagon, and the casing surface of which has a chamfer, which extends in the direction of the fuel rods and passes over continuously into the outer surface of a casing body, to which the plate is attached and at which the bottom side of the fuel element foot is located together with a centring bore for a centring pin, characterised in that the height of the chamfer (23a) on the casing surface of the plate (23), which forms the top side of the fuel element foot, is at least half of the plate height, preferably the whole plate height, and passes over without interruption into the outer surface of the casing body.

5. Nuclear reactor fuel element having a fuel element foot, located above the top side of which are nuclear-fuel-containing fuel rods, and which top side is formed by a plate, the contour of which is that of a regular polygon, in particular a square or a regular hexagon, and the casing surface of which has a chamfer, which extends in the direction of the fuel rods and passes over continuously into the outer surface of a casing body, to which the plate is attached and at which the bottom side of the fuel element foot is located together with a centring bore for a centring pin, characterised in that the casing body is attached to a frame plate (30) which has the contour of a regular polygon, is located on the bottom side of the fuel element foot (15) and protrudes beyond the outer surface of the casing body.

## Revendications

1. Coeur de réacteur nucléaire comportant une plaque inférieure de support de coeur et un assemblage combustible, qui comporte des crayons combustible contenant un combustible nucléaire et disposés au-dessus de la face supérieure, qui possède un contour en forme de polygone régulier, notamment un carré ou un hexagone régulier, d'un pied d'assemblage combustible, qui prend appui, par sa face inférieure, qui possède également le contour du polygone régulier, sur la face supérieure de la plaque inférieure de support de coeur, ainsi qu'une tige de centrage, qui est montée à une extrémité sur la face supérieure de la plaque inférieure de support de coeur et qui, à son autre extrémité, se termine en un cône et s'engage dans un trou de centrage dans le pied d'assemblage combustible, sur la face inférieure de ce dernier, la paroi de ce trou de centrage étant munie d'un biseau d'introduction pour la tige de centrage, caractérisé par le fait que l'angle aigu d'inclinaison du biseau d'introduction (34a) par rapport à l'axe longitudinal du trou de centrage (34) a, au moins dans un secteur (34c) de la paroi du trou de centrage (34), une valeur comprise entre 0,7 α et 1,3 α, α étant l'angle aigu d'inclinaison du cône (6a) de la tige de centrage (6) par rapport à l'axe longitudinal de cette tige.

2. Coeur de réacteur suivant la revendication 1, caractérisé par le fait que le biseau d'insertion comporte un angle d'inclinaison plus grand à l'extérieur du secteur (34c) qu'à l'intérieur de ce secteur (34c).

3. Coeur de réacteur suivant la revendication 1, caractérisé par le fait que l'angle aigu d'inclinaison du biseau d'insertion (34a) est égal à l'angle aigu d'inclinaison α du cône (6a) au moins dans le secteur (34c) de la paroi du trou de centrage (34).

4. Assemblage combutible pour réacteur nucléaire comportant un pied d'assemblage combustible, au-dessus de la face supérieure duquel sont disposés des crayons combustibles contenant un combustible nucléaire et dont la face supérieure est formée par une plaque ayant un contour de la forme d'un polygone régulier, notamment d'un carré ou d'un hexagone régulier, et dont la surface latérale comporte un biseau qui s'étend en direction des crayons combustibles et se prolonge progressivement par la surface extérieure d'un corps enveloppe, sur lequel est montée la plaque et sur lequel se trouve la face inférieure du pied d'assemblage combustible comportant un trou de centrage pour une tige de centrage,
caractérisé par le fait que le biseau (23a) sur la surface latérale de la plaque (23) formant la face supérieure du pied d'assemblage combustible a une hauteur égale à au moins la moitié de la hauteur de la plaque et de préférence égale à la hauteur complète de la plaque et se prolonge sans étagement dans la surface extérieure du corps enveloppe.

5. Assemblage combustible pour un réacteur nucléaire comportant un pied d'assemblage combustible, au-dessus de la face supérieure duquel se trouvent des crayons combustibles contenant un combustible nucléaire et dont la face supérieure est formée par une plaque qui a un contour de la forme d'un polygone régulier, notamment d'un carré ou d'un hexagone régulier, et dont la surface latérale comporte un biseau qui s'étend en direction des crayons combustibles et se prolonge progressivement dans la surface extérieure d'un corps enveloppe, sur lequel est montée la plaque et sur lequel se trouve la face inférieure du pied d'assemblage combustible comportant un trou de centrage pour une tige de centrage, caractérisé par le fait que le corps enveloppe est monté sur une plaque (30) formant cadre ayant le contour d'un polygone régulier et qui se trouve sur la face inférieure du pied (15) d'assemblage combustible et fait saillie au-delà de la surface extérieure du corps enveloppe.
